# EUROPÄISCHE PATENTSCHRIFT

(11) **EP 0 392 083 B1**
(45) Veröffentlichungstag und Bekanntmachung des Hinweises auf die Patenterteilung: **21.04.1993**
(21) Anmeldenummer: 89121571.7
(22) Anmeldetag: 21.11.1989
(51) Int. Cl.: A22C 11/10

(54) **Verfahren und Vorrichtung zum Abteilen eines von einer Füllmaschine kommenden durchgehenden Wurststranges in einzelne Würste**
Method of, and device for, dividing a string of sausages produced by a stuffing machine into single sausages
Procédé et dispositif pour diviser un chapelet de saucisses formé par une machine de bourrage en saucisses séparées

(30) Priorität: 11.04.1989 DE 3911859
(43) Veröffentlichungstag der Anmeldung: 17.10.1990
(73) Patentinhaber: Albert Handtmann Maschinenfabrik GmbH & Co. KG, D-88400 Biberach (DE)
(72) Erfinder: Staudenrausch, Georg, D-7950 Biberach/Riss 1 (Rissegg) (DE)
(74) Vertreter: Grünecker, Kinkeldey, Stockmair & Schwanhäusser Anwaltssozietät

(56) Entgegenhaltungen:
- DE-A- 3 024 509
- FR-A- 2 214 413
- US-A- 3 264 679
- US-A- 3 835 503
- US-A- 4 112 546
- US-A- 4 614 005

## Beschreibung

Die Erfindung betrifft ein Verfahren und eine Vorrichtung nach dem Oberbegriff des Anspruchs 1 bzw. 2.

Bei einer bekannten Vorrichtung dieser Art ist ein Elektromotor vorgesehen, der einerseits über einen Riementrieb eine Förderpumpe antreibt, welche den durchgehenden Wurststrang herstellt, der andererseits über einen variablen Keilriemenantrieb die Transporteinrichtung antreibt. Sie besteht aus zwei dem Wurststrang gegenüberliegenden Endlos-Ketten, die sowohl die Wurst erfassende Stege als auch Abteilzungen tragen, welche den Wurststrang einengen.

Dieser Transporteinrichtung ist eine Spannvorrichtung zum Drehen des Wurststranges vorgeschaltet, die ihren Antrieb vom variablen Keilriemenantrieb der Transporteinrichtung erfährt.

Bei dieser Vorrichtung wird die Fortschreitgeschwindigkeit des Wurststranges durch die Pumpe bewirkt, die mit einer konstanten Geschwindigkeit angetrieben wird. Der Wurststrang wird durch das stets umlaufende Spannfutter in Drehung versetzt. Hinter dem Spannfutter greifen die Abteilzungen der Endlosketten ineinander und verengen den Wurststrang, so daß an dieser Stelle das Abdrehen erfolgt, weil die Stege der Endlosketten den Wurststrang an einer Drehung hindern.

Das Gewicht der Würste, d.h. die Größe der Portionen, kann geringfügig geändert werden, indem mittels des variablen Keilriemenantriebs die Umlaufgeschwindigkeit der Endlosketten relativ zur Antriebsgeschwindigkeit der Pumpe geändert wird. Die Länge der Würste kann dagegen nur geändert werden, wenn die Endlosketten gegen andere ausgetauscht werden, auf welchen die Verdrängerelemente einen größeren Abstand zueinander aufweisen.

Diese bekannte Vorrichtung erlaubt nur eine eng begrenzte Änderung der Portionsgröße der Würste. Dabei muß außerdem die Umlaufgeschwindigkeit der Endlosketten mit verstellt werden, so daß die Fortschreitgeschwindigkeit des von der Pumpe kommenden Wurststranges mit der Fördergeschwindigkeit der Endlosketten nicht mehr richtig abgestimmt werden kann. Diese bekannte Vorrichtung ist zwar weiterentwickelt worden (US-A-4 614 005), indem die Verdrängerelemente auf den Endlosketten versetzt werden können, jedoch ist ein solches Versetzen aufwendig und führt dennoch nur zu einer stufenweisen Änderung der Wurstlänge.

Der Erfindung liegt die Aufgabe zugrunde, ein Verfahren und eine Vorrichtung anzugeben, bei welchen die Portionsgrößen und die Länge der Würste in sehr weiten Grenzen geändert werden können, wobei die gewünschten Portionsgrößen und Längen stets exakt wiederholbar einstellbar sind.

Zur Lösung dieser Aufgabe sieht die Erfindung ein Verfahren nach dem Anspruch 1 bzw. eine Vorrichtung nach dem Anspruch 2 vor.

Durch diese Maßnahmen ist es ohne Änderung von mechanischen Formatteilen möglich, z.B. die Verdrängerelemente außerhalb des Eingriffes mit dem Wurststrang langsamer umlaufen zu lassen und so die Größe der Portionen, d.h. auch die Länge der Würste in weiten Grenzen zu erhöhen.

Wenn die Einrichtung zum Drehen des Wurststranges ebenfalls mit einem eigenen Antrieb in Form eines Elektromotors versehen ist, kann die Länge der Würste noch weiter vergrößert werden, indem die Verdrängerelemente bei ihrem Umlauf außerhalb des Eingriffes mit dem Wurststrang für eine bestimmte Zeit durch die elektronische Steuerung stillgesetzt werden und die Einrichtung zum Drehen des Wurststranges ebenfalls intermittierend angetrieben wird.

Damit die Umlaufgeschwindigkeit der Verdrängerelemente während ihres Eingriffes mit dem Wurststrang der Fördergeschwindigkeit der Transporteinrichtung angepaßt werden kann, ist es gemäß der Erfindung auch möglich, für die Transporteinrichtung einen eigenen Antrieb in Form eines Elektromotors vorzusehen. Dies ist insbesondere bei zäherem Füllgut wichtig.

Alle als separater Antrieb dienenden Elektromotore werden von der elektronischen Steuerung entsprechend geregelt, so daß vom Computer programmierbar Füll- und Abteilvorgänge durchgeführt werden können.

Es ist auch möglich, allein durch Vorgabe des Portionsvolumens, der Portionsanzahl und des Kalibers für große Kaliberbereiche Wurstränge in stufenlos beliebige Portionslängen wiederholbar gewichtsgenau abzuteilen.

Gemäß der Erfindung kann der elektrische Antrieb für die Verdrängerelemente aus einem drehzahlregelbaren Elektromotor mit einem Getriebe mit zwei Antriebswellen bestehen, die bezüglich des Wurststranges gegenüber angeordnet sind, wobei jede Antriebswelle mit einem fahnenförmig angeordneten Verdrängerelement versehen ist. Jedes Verdrängerelement kann gegen ein solches für einen anderen Wurstkaliber-Bereich auswechselbar an den Antriebswellen angebracht sein. So kann die Vorrichtung rasch und einfach auch für besonders große Kaliber gestaltet werden.

Weitere Merkmale und Vorteile der Erfindung ergeben sich aus der nachfolgenden Beschreibung eines Ausführungsbeispieles anhand der Zeichnung.

Dabei zeigen:
- Fig.1: schematisch die Vorrichtung in Seitenansicht,
- Fig.2: einen Teil der Vorrichtung in Draufsicht, wobei die Transportbänder um 90° gedreht sind und
- Fig.3: eine Einzelheit der Vorrichtung.

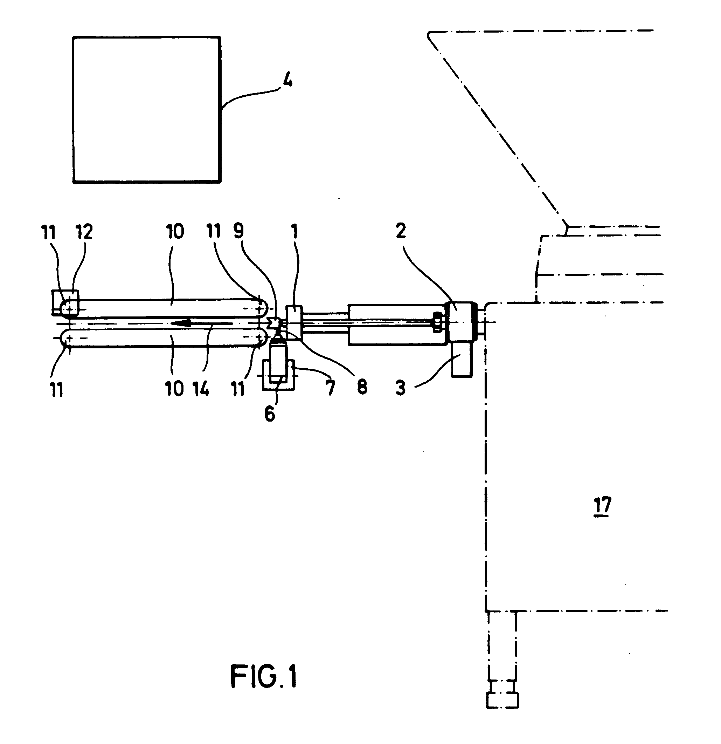

In Figur 1 ist strichpunktiert die mit 17 bezeichnete Füllmaschine dargestellt, aus welcher kontinuierlich das Füllgut in Strangform austritt und in der üblichen Weise in die Hülle eingefüllt wird. Der so geschaffene Wurststrang 5 wird durch die zentrische Öffnung eines Bremsringes 1 gefördert, der durch ein Abdrehgetriebe 2 in Drehung versetzt werden kann und dabei den Wurststrang 5 mitdreht.

Das Abdrehgetriebe 2 wird von einem Elektromotor 3 angetrieben, der von einer elektronischen Steuerung 4 drehzahlgeregelt wird.

Unmittelbar nach dem Bremsring 1 gelangt der Wurststrang 5 zu einer Abteileinrichtung, die aus zwei Verdrängereinheiten 6 besteht. Die beiden Verdrängereinheiten sind mit einem Elektromotor 7 verbunden, der ebenfalls von der elektronischen Steuerung 4 drehzahlgeregelt wird.

Der Elektromotor 7 ist mit einem Getriebe 18 zusammengebaut, welches zwei Antriebswellen 8 aufweist.

Auf jeder Antriebswelle 8 ist ein Verdrängerelement 9 aufgesteckt und damit starr verbunden.

Der Abteileinrichtung ist eine Transporteinrichtung nachgeschaltet, die aus zwei Endlosförderbändern 10 besteht. Die Förderbänder 10 sind in bekannter Weise um Umlenkräder 11 geführt, von denen welche als Antriebsräder mit einem drehzahlregelbaren Elektromotor 12 verbunden sind, der wiederum von der elektronischen Steuerung 4 geregelt wird. (Fig.1)

Die Förderbänder 10 laufen im Gegensinn um und transportieren die abgeteilten Würste 13 in Pfeilrichtung 14 ab.

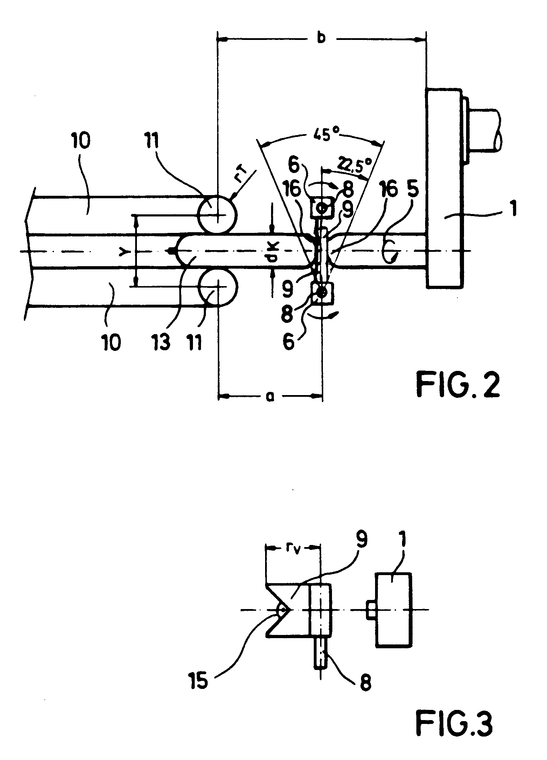

Jedes Verdrängerelement 9 ist fahnenförmig an der zugeordneten Antriebswelle 8 des Getriebes angebracht und weist einen V-förmigen Ausschnitt 15 auf, der zum Wurststrang 5 hin randoffen ist (Figur 3). Die Verdrängerelemente 9 greifen beim Einschnüren der Portion verschränkt ineinander.

Die gesamte Vorrichtung arbeitet wie folgt:
Der von der Füllmaschine 17 kommende Wurststrang 5 wird durch den Bremsring 1, der über das Getriebe 2 durch den Elektromotor 3 angetrieben wird, in Drehung versetzt, wie in Figur 2 durch den Pfeil angedeutet ist.

Die gegensinnig umlaufenden Verdrängerelemente 9 (in Figur 2 durch die Pfeile angedeutet) kommen mit dem sich drehenden Wurststrang 5 in Berührung, wenn sie je nach Kaliber etwa einen Winkel von 45° einschließen (siehe Figur 2).

Während die Verdrängerelemente 9 mit dem Wurststrang 5 in Eingriff sind, ist ihre Drehzahl so geregelt, daß die Umlaufgeschwindigkeit ihres Kreuzungspunktes (Durchlaß für die Wursthülle) mit der Fortschreitgeschwindigkeit des Wurststranges 5 im wesentlichen übereinstimmt, die durch die Endlosbänder 10 erzwungen wird.

Der Wurststrang 5 dreht sich während des Einengens durch die Verdrängerelemente 9 noch so lang, bis das vordere, bereits abgedrehte Ende der Wurst 13 von den Endlosbändern 10 erfaßt wird und eine weitere Einschnürung bei der folgenden Portion erfolgt. Nachdem sich der rückwärtige Wurststrang 5 weiterdreht, erfolgt dabei ein Abdrehen des rückwärtigen Endes der Wurst.

Wenn die Verdrängerelemente 9 mit konstanter Drehzahl umlaufen, werden Würste einer bestimmten Länge erzeugt, die bei einem gleichbleibenden Kaliber eine bestimmte Portionsgröße aufweisen.

Sollen nun Würste mit größerer Länge hergestellt werden, so regelt die elektronische Steuerung 4 die Umlaufgeschwindigkeit der Verdrängerelemente 9 so, daß sie außer Eingriff mit dem Wurststrang 5, also funktionslos, langsamer umlaufen.

Um Würste sehr großer Länge erzeugen zu können, kann die Umlaufgeschwindigkeit der Verdrängerelemente 9 während der funktionslosen Phase bis auf Null geregelt werden, so daß sie eine bestimmt Zeit stillstehen. Um dabei dennoch ein sicheres Abteilen zu ermöglichen, wird schließlich der Bremsring 1 stillgesetzt, so daß sich der Wurststrang 5 nicht dreht und deshalb ohne Störung zwischen die Endlosbänder 10 einlaufen kann.

Erst wenn die Verdrängerelemente 9 den Wurststrang 5 abteilen, wird in diesem Fall der Bremsring 1 in Drehung versetzt und somit die Wurst von sehr großer Länge abgedreht.

Die V-Form der Verdrängerelemente 9 ermöglicht es, damit Wurststränge in einem Bereich von z.B. etwa 13 mm Durchmesser bis ungefähr 30 mm Durchmesser abzuteilen.

Wenn Würste mit noch größerem Kaliber dK hergestellt werden sollen, können die Verdrängerelemente 9 einfach und rasch gegen andere ausgetauscht werden, ebenso der Bremsring. Dabei ist der Abstand Y der Endlosbänder in bekannter Weise zu vergrößern. Außerdem kann der Abstand der Antriebswellen 8 entsprechend vergrößert werden.

Wenn die Umlaufgeschwindigkeit der Verdrängerelemente 9 während ihrer funktionslosen Phase vergrößert wird, werden kürzere Würste erzielt. Die kleinste Portionslänge ergibt sich aus dem Abstand a in Figur 2, abhängig vom Radius rT der Umlenkräder und der Länge rV der Verdrängerelemente 9.

## Patentansprüche

1. Verfahren zum Abteilen eines von einer Füllmaschine kommenden durchgehenden Wurststranges in einzelne Würste, wobei der Wurststrang um seine Längsachse gedreht und jeweils in einem bestimmten Abstand durch umlaufende Verdrängerelemente, deren Drehachsen in einer Ebene liegen, die senkrecht zur Längsachse des sich drehenden Wurststranges liegt, eingeengt und in an einer Drehung gehinderte Würste abgeteilt wird, welche mit einer bestimmten Fördergeschwindigkeit weiterbefördert werden,
**dadurch gekennzeichnet,**
daß die Umlaufgeschwindigkeit der Verdrängerelemente während ihres funktionslosen Teilumlaufes relativ zu ihrer Umlaufgeschwindigkeit während ihres Eingriffes mit dem Wurststrang veränderbar ist.

2. Vorrichtung zum Abteilen eines von einer Füllmaschine kommenden durchgehenden Wurststranges in einzelne Würste, bestehend aus einer Einrichtung zum Drehen des Wurststranges (2), einer Abteileinrichtung (6) mit zwei gegenläufig umlaufenden Verdrängerelementen (9), deren Drehachsen in einer Ebene liegen, die senkrecht zur Längsachse des sich drehenden Wurststranges liegt, und einer die abgeteilten Würste an einer Drehung hindernden und diese weiterfördernden Transporteinrichtung (10),
**dadurch gekennzeichnet,**
daß die Verdrängerelemente (9) einen eigenen elektrischen Antrieb (7) aufweisen, dessen Drehzahl während des Umlaufes durch eine elektronische Steuerung (4) regelbar ist.

3. Vorrichtung nach Anspruch 2,
**dadurch gekennzeichnet**,
daß der elektrische Antrieb für die Verdrängerelemente aus einem drehzahlregelbaren Elektromotor (7) und einem Getriebe mit zwei Antriebswellen (8) besteht, die bezüglich des Wurststranges (5) gegenüber angeordnet sind, wobei jede Antriebswelle (8) mit einem fahnenförmig angeordneten Verdrängerelement (9) versehen ist.

4. Vorrichtung nach Anspruch 2,
**dadurch gekennzeichnet**,
daß der elektrische Antrieb für die Verdrängerelemente aus zwei drehzahlregelbaren, synchron laufenden Elektromotoren besteht, die bezüglich des Wurststranges (5) gegenüber angeordnet sind, wobei die Antriebswelle jedes Elektromotors mit einem fahnenförmig angeordneten Verdrängerelement versehen ist.

5. Vorrichtung nach Anspruch 2 oder 3,
**dadurch gekennzeichnet**,
daß für die Transporteinrichtung (10) ein eigener Antrieb in Form eines drehzahlregelbaren Elektromotors (12) vorgesehen ist.

6. Vorrichtung nach mindestens einem der Ansprüche 2 bis 5,
**dadurch gekennzeichnet**,
daß die Einrichtung (1,2) zum Drehen des Wurststranges (5) mit einem eigenen Antrieb in Form eines drehzahlregelbaren Elektromotors (3) versehen ist.

7. Vorrichtung nach mindestens einem der Ansprüche 2 bis 6,
**dadurch gekennzeichnet**,
daß die Verdrängerelemente (9) gegen solche für einen anderen Wurstkaliberbereich (dK) auswechselbar an den Antriebswellen (8) angebracht sind.

## Claims

1. Method for dividing a continuous sausage string coming from a stuffing machine into individual sausages, wherein the sausage string is turned on its longitudinal axis and constricted each time at a given interval by rotating displacer elements of which the axes of rotation lie in a plane which is perpendicular to the longitudinal axis of the rotating sausage string and divided into sausages which are prevented from turning and which are conveyed on at a given conveying speed, characterised in that the speed of rotation of the displacer elements during functionless partial rotation thereof is variable relative to their speed of rotation during engagement thereof with the sausage string.

2. Apparatus for dividing a continuous sausage string coming from a stuffing machine into individual sausages, consisting of a device for turning the sausage string (2), a dividing device (6) with two counterrotating displacer elements (9) of which the axes of rotation lie in a plane which is perpendicular to the longitudinal axis of the rotating sausage string, and a transport device (10) which prevents the divided sausages from turning and conveys them on, characterised in that the displacer elements (9) comprise an independent electric drive (7) of which the speed is variable during rotation by electronic control means (4).

3. Apparatus according to claim 2, characterised in that the electric drive for the displacer elements consists of a variable-speed electric motor (7) and a gear with two driving shafts (8) which are arranged opposite in relation to the sausage string (5), wherein each driving shaft (8) is provided with a displacer element (9) arranged like a flag.

4. Apparatus according to claim 2, characterised in that the electric drive for the displacer elements consists of two variable-speed, synchronously rotating electric motors which are arranged opposite in relation to the sausage string (5), wherein the driving shaft of each electric motor is provided with a displacer element arranged like a flag.

5. Apparatus according to claim 2 or 3, characterised in that an independent drive in the form of a variable-speed electric motor (12) is provided for the transport device (10).

6. Apparatus according to one or more of claims 2 to 5, characterised in that the device (1, 2) for turning the sausage string (5) is provided with an independent drive in the form of a variable-speed electric motor (3).

7. Apparatus according to one or more of claims 2 to 6, characterised in that the displacer elements (9) are mounted on the driving shafts (8) so as to be capable of being exchanged for ones for a different sausage calibre range (dK).

## Revendications

1. Procédé pour diviser un boudin continu formant saucisses sortant d'une machine de bourrage, en saucisses individuelles, le boudin formant saucisses étant tourné autour de son axe longitudinal et chaque fois, à des intervalles déterminés, resserré par des éléments déplaceurs rotatifs, dont les axes de rotation se trouvent dans un plan perpendiculaire à l'axe longitudinal du boudin à saucisses tournant, puis divisé en saucisses qui, empêchées de tourner, sont évacuées à une vitesse de transport déterminée, caractérisé en ce que la vitesse de rotation des éléments déplaceurs est variable, lors de la partie de leur tour de rotation exempte de fonctionnement, par rapport à leur vitesse de rotation lors de leur mise en prise avec le boudin à saucisses.

2. Dispositif pour diviser un boudin continu formant saucisses sortant d'une machine de bourrage, en saucisses individuelles, constitué par un mécanisme (2) pour faire tourner le boudin formant saucisses, par un mécanisme diviseur (6) muni de deux éléments déplaceurs tournant en sens opposé l'un par rapport à l'autre et dont les axes de rotation se trouvent dans un plan perpendiculaire à l'axe longitudinal du boudin à saucisses tournant, et par un transporteur (10) empêchant les saucisses détachées de tourner et évacuant ces derniers, caractérisé en ce que les éléments déplaceurs (9) comportent leur propre mécanisme d'entraînement électrique (7) dont la vitesse de rotation est réglable, en cours de rotation, par une commande électronique (4).

3. Dispositif selon la revendication 2, caractérisé en ce que le mécanisme de commande électrique pour les éléments déplaceurs est constitué par un moteur électrique (7) à vitesse réglable et par un mécanisme de transmission muni de deux arbres d'entraînement (8) qui sont disposés l'un en regard de l'autre de part et d'autre du boudin à saucisses (5), chaque arbre d'entraînement (8) étant muni d'un élément déplaceur (9) disposé en forme de fanion.

4. Dispositif selon la revendication 2, caractérisé en ce que le mécanisme de commande électrique pour les éléments déplaceurs est constitué par deux moteurs électriques à vitesse réglable qui tournent en synchronisme et sont disposés, l'un en regard de l'autre, de part et d'autre du boudin à saucisses (5), l'arbre d'entraînement de chaque moteur électrique étant muni d'un élément déplaceur disposé en forme de fanion.

5. Dispositif selon la revendication 2 ou 3, caractérisé en ce que pour le transporteur (10) est prévu son propre mécanisme de commande présenté sous la forme d'un moteur électrique (12) à vitesse réglable.

6. Dispositif selon l'une quelconque des revendications 2 à 5, caractérisé en ce que le mécanisme (1, 2) pour faire tourner le boudin à saucisses (5) est équipé de son propre mécanisme d'entraînement présenté sous la forme d'un moteur électrique (3) à vitesse réglable.

7. Dispositif selon l'une quelconque des revendications 2 à 6, caractérisé en ce que les éléments déplaceurs (9) sont montés sur les arbres d'entraînement (8) de manière à pouvoir être remplacés par d'autres éléments déplaceurs pour un autre intervalle de calibre de saucisse (dK).
